# EUROPEAN PATENT SPECIFICATION

(11) **EP 2 690 295 B1**
(45) Date of publication and mention of the grant of the patent: **18.10.2017**
(21) Application number: 12719922.2
(22) Date of filing: 23.03.2012
(51) Int. Cl.: F16C 17/10, F16C 43/02, F16C 33/04

(54) **FLANGED BRONZE BEARING**
LAGER AUS BRONZE MIT FLANSCH
PALIER DE BRONZE AVEC FLASQUE

(30) Priority: 25.03.2011 BR PI1100941
(43) Date of publication of application: 29.01.2014
(73) Proprietor: Mahle Metal Leve S/A, 13210-877 Jundiaí, SP (BR); MAHLE International GmbH, 70376 Stuttgart (DE)
(72) Inventor: PIEROTTI FERREIRA, Roberto, CEP-05674-000 Sao Paulo, SP (BR)
(74) Representative: BRP Renaud & Partner mbB Rechtsanwälte Patentanwälte Steuerberater
(86) International application number: PCT/BR2012/000074
(87) International publication number: WO 2012/129624

(56) References cited:
- EP-A1- 0 515 657
- WO-A1-93/17250
- US-A- 5 114 246

## Description

The present invention relates to a flanged bronze bushing used on internal combustion engines, provided with a sliding bearing coupled to an axial bearing by fixation means that undergo plastic deformation.

### Description of the Prior Art

A flanged bearing according to the preamble of claim 1 is known from WO 93/17250 A. Due to the need for higher combustion pressure, which leads to the employ of greater force for closing the clutch while changing gears, and consequently to a greater reaction on the internal axial bearings, the Diesel and Otto engines have to increase the axial load on the surface of the crankshaft disk. As a result, the axial reactions on slide bearings that use flanges will also undergo an increase in load, which impairs the product life, if the product is not developed property.

The possibility of mounting different materials on the slide bearing and on the axial bearing facilitates its application and prolongs the useful life of the assembly. The use of this type of product is influenced by the convictions of the companies that manufacture engines, which can opt for thrust washers, purely axial bearings, totally separated from the slide bearings by bronze bushings with rigid flange, of a single piece, and still by bronze bushings with mounted flange, with flange fixed to the bronze bushing or flexible wooden bushing, whereby one obtains the benefits of adapting the deformations, widening and mounting, as well as the typical vibrations of internal combustion engines.

Besides, in order to guarantee the fixation of the rest washer to the bronze bushing, it is necessary to restrict it to three directions, while keeping it flexible, free from rigid links, enabling it to accommodate to the distortions and vibrations that are characteristic of the machines. The first restriction, the rotational one, bears the stresses generated by friction between the rest disk of the crankshaft and the slide surface of the axial bearing, friction torque. The second restriction, the radial one, prevents the flange from detaching totally and falling onto the driving axle. The third restriction is axial and bears the vibration stresses of the driving axle. All these restrictions should guarantee that the flange will not detach during transportation until the assembling of the machine, or during the useful life thereof.

Various types of fixation were proposed, such as welding, gluing, crushing and resilient fixation. Due to the high manufacture cost resulting from minor geometries and inadequate processes, they have become prohibitive for manufacture. The assembling process by permanent deformation via geometry of the bronze bushing does not require special mounting devices, only the axial mounting force which per se deforms the fixing element in a housing with cooperating geometry, which facilitates the productive process with cost reduction.

A few examples of the prior art that can be cited are described in the patent documents cited hereinafter.

Patent document US4076342 relates to a flange that has, in its internal diameter, a thinner section that is received in a channel in the back of the bronze bearing, on the steal side, guaranteeing retention in the axial direction. The fixation device has two protrusions located at the flange ends and two recesses that are made in the bronze bearing as well. With radial mounting, the bronze bearing deforms and enables the recesses at the ends to receive the flange protrusions, thus fitting into the channel the thin flange section.

Patent document US4533261 relates to the mounting of the flange in a direction radial to the bronze bushing and the mounting process is an interaction of the rigidity of the bronze bushing with that of the flange. The flange has two spaced-apart protrusions close to the ends, provided with convex prisms, which are responsible for fixing the parts, under cooperation of the recesses in the form of a hook on the bronze bushing. The mounting if of the click-type, working with the two elements bronze bushing and flange, in the elastic phase, since if one presses the flange protrusions exactly onto the recesses on the bronze bushing, both flange and bronze bushing give way and enable the protrusions to fit into the recesses.

Patent document GB2210113 relates to a solution in which the flange is mounted on the bronze bushing in radial direction, wherein the first protrusion to fit is a central one, and by elastic deformation of the bronze bushing, other points at the flange end fit into cooperating recesses at the end thereof, which may be dovetail-shaped, chamfered or notched, made at the time of stamping the bronze bushing.

Patent document GB2225392 relates to a solution having only one flange fixing protrusion, located in the center, mounted axially and locked in a plastic manner by action of punches on the side of the bronze bushing. The protrusion has side chamfers formed at the time of stamping, which serve as a support to receive the plastically deformed material of the bronze bushing, through punches, close to the protrusion, on the side of the bronze bushing.

Patent document GB 2225393 relates to a solution, just as Patent GB2225392, but with more than one protrusion projected out of the plane in order to minimize the material to be machined while forming the fillet radius of the crankshaft.

Patent document GB2241752 relates to a solution in which the flange has protrusions that are deformed into the recesses of the bushing, which in turn undergo the external action, opening the material at the side of the flange protrusions in the bushing region, thus fixing them.

Patent document US5114246 relates to a solution in which the flange is mounted axially on the bronze bushing. The thrust washer is mounted on the bronze bushing through cooperation between the protrusions and the recesses on the bronze bushing. After insertion of the protrusions into the recesses, they are crushed so as to fixe the flange.

Patent document EP0515657 relates to a solution in which the fixation of the flange to the bronze bushing is carried out by plastic deformation of one of the fixation protrusions, the latter goes through the slot located at the side of the bronze bushing in the center of the region of the escape recess of the crankshaft radius, the part of the protrusion that remains exposed in the recess is crushed, which prevents the flange from detaching in radial direction. This design offers great risk to the crankshaft radius and may scratch it, thus damaging the assembly. Prevention of rotational movement of the flange is achieved with non-deformable rigid protrusions, fixed in recesses on the bronze bushing, which can be open or in the form of a slot.

Patent document DE4041557 relates to a solution of radial mounting by elastic deformation of the bronze bushing, thus enabling the introduction of hook-shaped recesses, which engage with recesses on the bronze bushing. Brazilian Patent document PI 0703980-8 presents a solution with radial mounting by elastic deformation of a radial bearing, which can be attached, fitted, or even mounted, enabling relative movements, on the side of the bronze bushing, of designated elastic fixation claws, which are extensions of the inner diameter, having corresponding cooperating geometry recesses on the slide bearing.

For better understanding, the cited patent documents are listed below, according to their mounting characteristics or to the type of fixation.

**Table 1- Technical solution for mounting a flange**

| | | **Mounting dirction** | | **Type of fixationsolution** | | |
|---|---|---|---|---|---|---|
| **Patent number** | **Filing date** | **Axial** | **Radial** | **"click"'** | **Elastic** | **Plastic** |
| US4533261 | JUN, 6, 85 | | x | x | x | |
| GB2210113 | AUG, 2, 88 | | x | x | x | |
| GB2225392 | NOV, 25, 88 | x | | | | x |
| GB2225393 | NOV, 25, 88 | x | | | | x |
| GB2241752 | MAR 2, 90 | x | | | | x |
| US5114246 | DEC 2, 90 | x | | | | x |
| DE4041557 | DEC 22, 90 | | x | x | x | |
| EP0515657 | DEC 17, 91 | | x | | | x |
| PI 0703980-8 | SEP 4,07 | x | | | x | |

As demonstrated above, there are a number of ideas for the solution to flange mounting, many of them with subtleties that depend on fractions of an angle to guarantee fixation or even lowermost tenths of millimeters for the same function.

In most documents presented, the locking elements presented impair the life of the assembly because they are thin and may break, or they may not even be produced due to the great flexibility of the elements. Other solutions such as welding, and gluing, were also used for fixation, but such solutions make the system extremely rigid, losing the benefit of flexibility of the flange with respect to the bronze bushing.

However, as can be seen, there is now solution presenting a bronze bushing composed by an axial bearing and a slide bearing, wherein the axial bearing engages with the slide bearing by plastic deformation, without impairing the integrity of the flange-fixing element, since the plastic deformation of the fixing element is made within geometries and dimensions that are feasible in present-day manufacture processes.

### Objectives of the Invention

Therefore, it is an objective of the present invention to provide a flanged bronze bushing containing a slide bearing, and it may be a bronze bushing or a bushing that enables one to mount at least one axial bearing in the form of a flange that can be attached, fitted or even mounted, enabling relative movements of plastic fixation claws with respect to each other, which are designated herein as deformable protrusions and are extensions of the inner diameter, having corresponding cooperating geometry recesses on the slide bearing.

It is a further objective of the present invention to enable the mounting of different materials between the axial bearing and the slide bearing. Thus, one can mount a polymeric flange on a slide bearing of a metallic compound or vice-versa, both having tribologic properties suitable to the application thus contributing to the technological development of the machines.

### Brief Description of the Invention

The objectives of the present invention are achieved by means of a flanged bronze bushing according to claim 1. The above-mentioned characteristics, in addition to other features of the present invention, will be better understood through the examples and the detailed description of the attached figures.

### Brief description of the drawings

The present invention will now be described in greater detail with reference to an embodiment represented in the drawings. The figures show:
- Figure 1 is an illustration of a flanged bronze bushing of the prior art, provided with resilient fixation means;
- Figure 2 is an illustration of an embodiment of a flanged bronze bushing according to the present invention, prior to association between its parts;
- Figure 3 is an illustration of the protrusions of the axial bearing prior to association to the recess of the slide bearing;
- Figure 4 is an illustration of the detail "A" in Figure 2, after association between its parts;
- Figure 5 is an illustration of a possible embodiment of the flanged bronze bushing of the present invention, prior to association between its parts;
- Figure 6 is an illustration of the flanged bronze bushing shown in figure 5, after association between its parts;
- Figure 7 is an illustration of the detail "B" of the bronze bushing illustrated ion figure 6;
- Figure 8 is an illustration of an example of the plastic deformation of mounting of the deformable protrusions.

### Detailed description of the figures

The present invention relates to a flanged bronze bushing 100, for use on internal combustion engine, particularly on the crankshaft. Such use is due to the fact that, when the vehicle is in motion or geared, the transmission remains coupled to the motor by means of the clutch, which, in its essence, uses the crankshaft as a support point to promote the uncoupling of the engine from the transmission, which results from stepping on the vehicle clutch, thus enabling gear change. It is at this moment that the crankshaft undergoes a great axial stress, reflecting the stress to the axial bearing, known also as flange.

The flanged bronze bushing 100 of the present invention was invented with a view to enable perfect functioning of moveable parts, minimizing friction and guaranteeing movement with respective the transmission of force.

However, before describing the flanged bronze bushing 100 of the present invention, one should distinguish it from the solution presented in the prior art, which represents a flanged bronze bushing 200 capable of bearing said axial movements caused by the crankshaft so as not to detach.

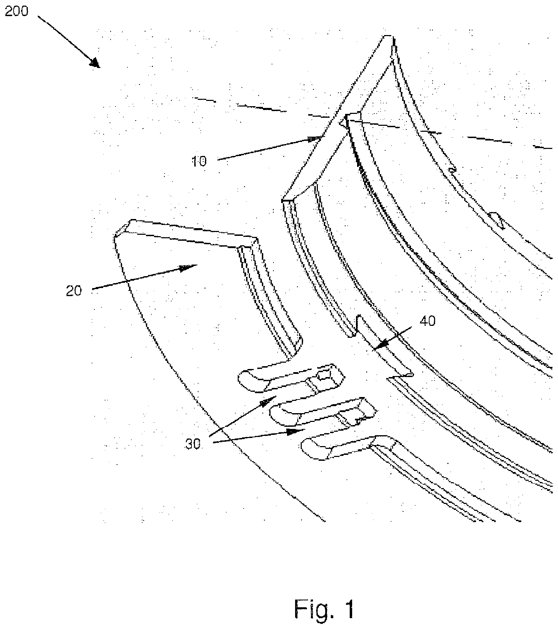

For this purpose and as can be seen in figure 1, the flanged bronze bushing 200 of the prior art comprises an axial bearing 20, provided with resilient protrusions 30 and a slide bearing 10, provided with recesses 40 for receiving the resilient protrusions 30.

The final configuration of the flanged bronze bushing 200 is achieved by mounting the axial bearing 200 on the slide bearing 10. Such a mounting takes place due to the elastic deformation of the protrusions 30 for passing through the recess 40 trapeze and then the protrusions 30 are released, so that the will return to the original non-deformed state, fitting into the recesses 40 and enabling the dismounting thereof. This mounting is only possible because the protrusions 30 have such a characteristic that enable them to undergo a stress and return to their initial position, that is, allow them to undergo resilient or elastic deformation, known also as spring effect.

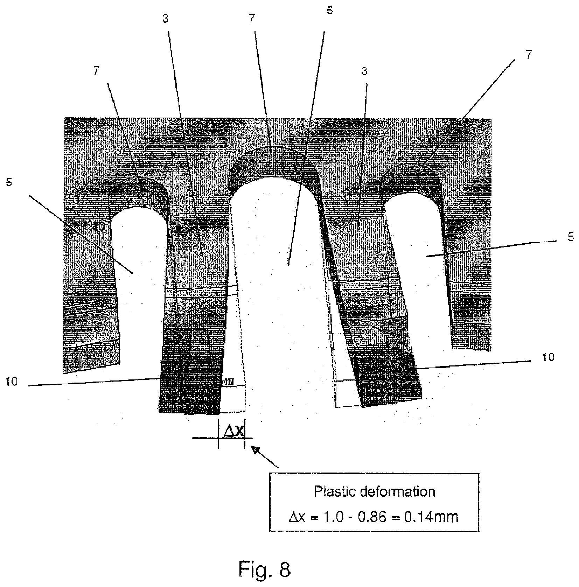

The object of the present invention tends to solve the problem of resistance to the axial stresses caused by movement of the crankshaft, by means of a flanged bronze bushing 100 provided with a type of fixation in which the protrusions of the axial bearing are deformed during the mounting and do not return to the initial position, that is, taking on a new position, the final position, after they are mounted on the slide bearing. The difference between the initial position and the final position is a plastic deformation ΔX, which may range from 0.1 to 2.0mm and preferably from 0.1 to 1.0mm. As an example, Figure 8 shows a plastic deformation ΔX of the protrusions 3 by a value of about 0.14mm.

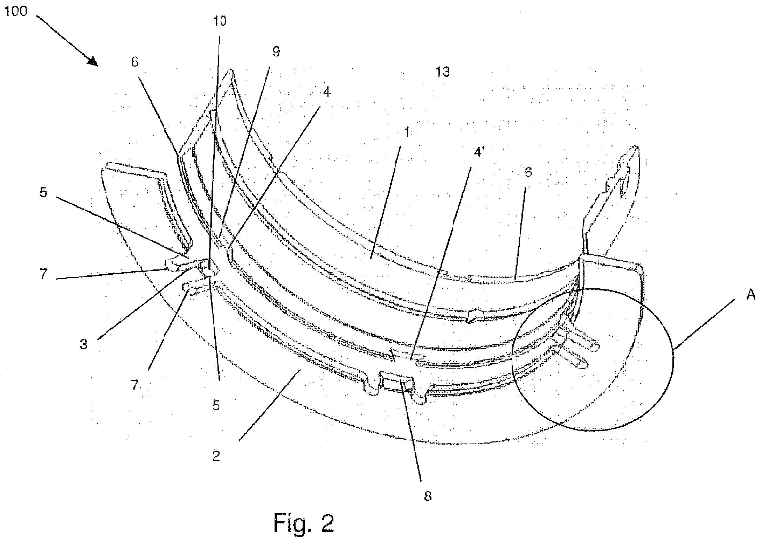

Figure 2 illustrates one first possible embodiment of the flanged bronze bushing 100 of the present invention, which comprises basically a slide bearing 1 and an axial bearing 2. This figure has a position before the mounting, that is, before the deformable protrusions 3 are inserted into the fixation recess 4.

As one can further see in figure 2, the slide bearing 1 has three recesses on each side, arranged in its side regions 6 or thickness, wherein two recesses are inclined 4 and one recess being fix 4' on each side. The fixed recess 4' has a shape resembling an inclined square (with inclined side walls), each of them being provided with two inclined side walls, one of the walls having an angle between it and the base ranging from 100° to 170°, preferably 135°, and an angle between the other side wall and the base ranging from 15° to 60°, preferably 45°.

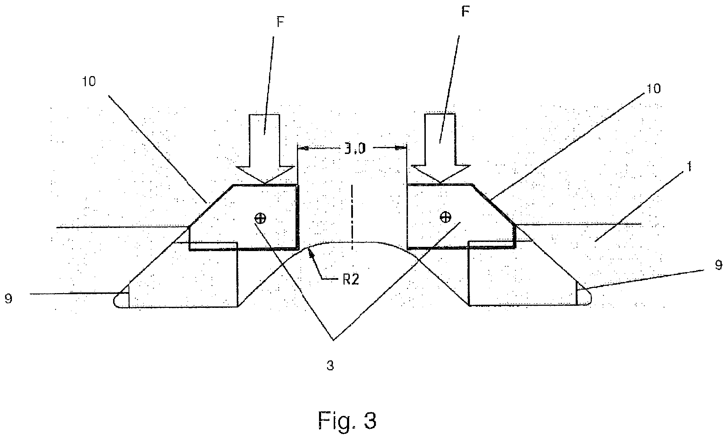

It is further possible to observe in figure 2 that the axial bearing 2 has deformable fixation protrusions 3. formed by eliminating material around it, apart from the base, which maintains it as part of the axial bearing 2. The protrusions 3 are nothing else than the think elements that resemble a finger, the geometry of which is intended to guarantee their plasticity as a function of the materials employed. On the other hand, the adjacent spaces 5 are regions where the protrusions 3 are deformed by a measure defined in the design of the piece, so as to flow within the flow limits of the materials, without reaching the break limit of the materials employed, thus taking on a new position. The adjacent space 5 will also serve for withdrawal of the axial bearing 2 at a moment of maintenance. The deformation for mounting the deformable protrusions 3 into the space 5 is effected by an external force F, as shown in Figure 3.

The stresses due to the deformation for mounting, at the base of the deformable protrusions 3, are minimized by stress-alleviating rounded surfaces 7, adjacent the deformable fixation protrusions 3 and that impart plasticity to them, known in the technical literature as being suitable for this purpose. The deformable fixation protrusions 3 of the axial bearing 2, further have, at their ends, ahead of the inner diameter of the bearing, chamfers or surfaces 10 that cooperate with the surfaces formed by the stops 9 of the slide bearing 1 at the time of mounting. The inclined recess 4, which have stops 9, is shaped like an inclined square, so that the surfaces 10 at the ends of the two deformable fixation protrusions 3 will cooperate for fixation thereof, by virtue of the similarity in geometry. The fixation of the axial bearing 2 in axial direction is guaranteed by the retention of surface 10 by the stop 9.

Figure 3 illustrates a detail of one of the inclined recesses 4 provided with two side walls, one of them having smaller angles ranging from 15° to 60° and that serve as stops to catch the deformable protrusions 3 of the axial bearing 2, and the other wall having larger angles ranging from 100° to 170° and that serve aid the deformable protrusions 3 in undergoing plastic deformation, taking on a different position as compared with the position before the mounting. During the mounting, the configuration of the two walls, together with the surfaces 10, cause the deformable protrusions 3 to be caught by the stops 9.

The recesses 4 have the function of preventing release of the axial bearing 2 and of the slide bearing 1 in directions X (rotation), Y (axial) and Z (radial). The prevention takes place due to the form of the stop 9, which has an angle suitable for this function. The angle has a geometry cooperating with that of the surface 10, which is at the end of the deformable fixation protrusions 3.

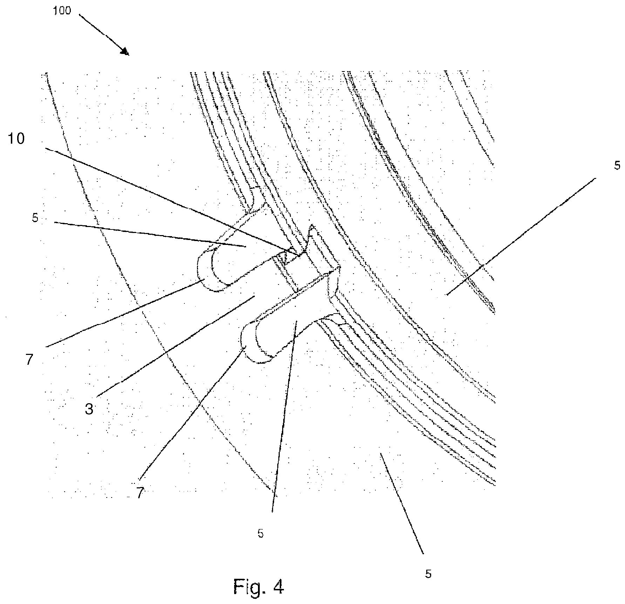

Once the recesses 4 and the deformable protrusions 3 match, they cooperate with each other, causing the axial bearing 2 to engage with the slide bearing 1, thus preventing them from detaching from each other. The prevention takes place due to the form of the stop 9, which as an angle suitable for this function. The angle has a geometry cooperating with that of the surface 10, which is at the end of the deformable fixation protrusions 3, as shown in figure 4.

It should be reminded that the fixation of the axial bearing 2 and of the slide bearing 1 takes place in the three main direction: axial, radial, rotational. The axial fixation if promoted by the stops 9 and by the geometric cooperation of the chamfer 10 and still by the fixed recess 4' and by the fix protrusion 8. In the radial direction, it takes place by distribution of the inclined recesses 4 and deformable protrusions 3 along the 180 degrees of the bronze bushing and of the slide bearing, respectively, so that the stops 9 will be in divergence with the releasing movement. In the rotational direction, it is prevented by the section resistant to shearing force of the protrusion 3 and to crushing by the cooperating geometries of the chamfer 10 and of the stop 9. It should be noted that for each slide bearing 1 two axial bearings 2 are mounted, one in each side region 6.

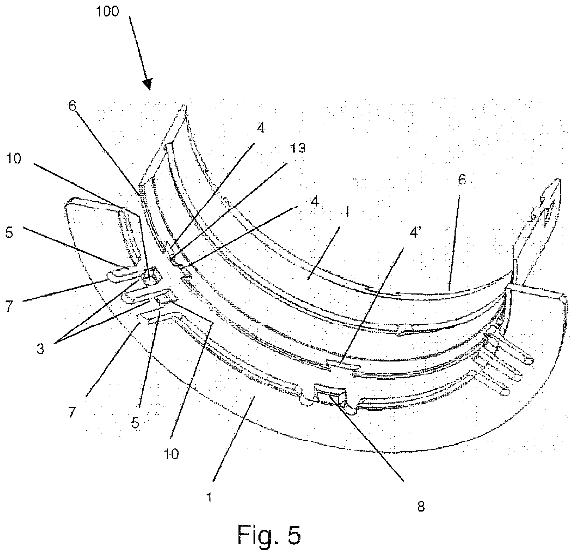

Figure 5, in turn, illustrates a flanged bronze bushing 100, prior to mounting, but the latter has at least one axial bearing 2, comprising at least four deformable protrusions 3, grouped in two sets and still a slide bearing 1 having at least four inclined recesses 4, also grouped ion two sets, provided with stops 9 and still at least two fixed recesses 4', one on each side 6 of the slide bearing 1. The inclined recesses 4 may have, for this embodiment, the shape of a trapeze, and ion the central part of its larger base there is a trapezoidal protrusion 13, which serves as sliding part of the deformable protrusions 3 during the mounting process.

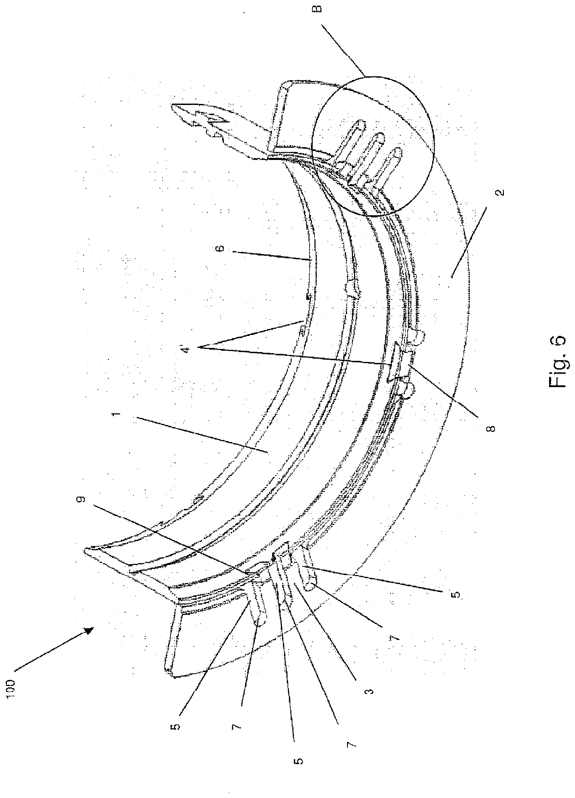

Figure 6 illustrates a flanged bronze bushing 100 after mounting, wherein, as described for the first embodiment, the deformable protrusions 3, upon receiving a force F (as illustrated in figure 3), are capable of deforming, sliding over the inclined walls of the inclined recesses 4 and fixing with the stops 9, thus causing the axial bearing 2 to fix to the slide bearing 1, compulsorily in the three main directions: axial, radial, rotational. After deformation, the deformable protrusions exhibit plastic deformation ΔX ranging from 0.1 to 1.0mm (an example thereof can be observed in figure 8).

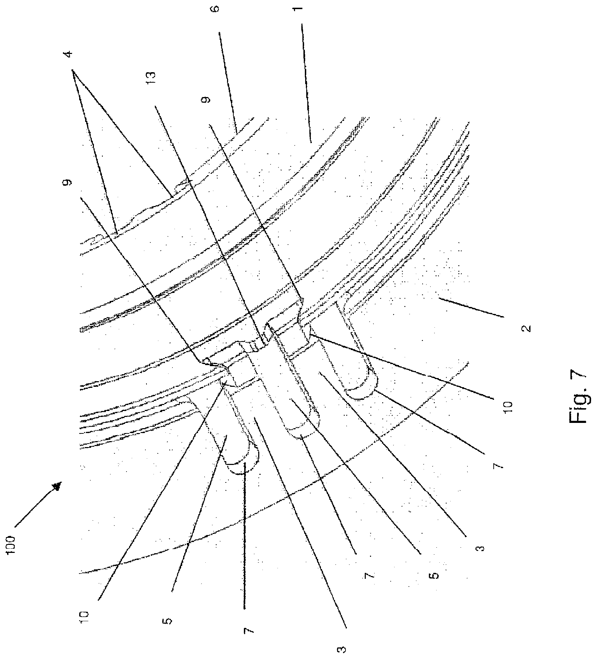

Figure 7 illustrates the detail "B" shown in figure 6, with the protrusions 3 already deformed and in the final position 12, this position being different from the initial position 11, prior to mounting.

It should be noted that both the slide bearing 1 and the axial bearing 2 may be made from the same material, from different materials or still may have various layers of different materials. As for example the following materials: plastic resin, epoxy resin, material containing fluoride or fluoropolymer.

The great advantage of this invention is to promote the axial mounting without introduction of residual stresses, which are harmful to the life, fatigue, associated to the processes of soldering or stamping material, thus facilitating the manufacture process and reducing the mounting cost.

The perfect adjustment between the stops 9 and the surfaces 10 takes place due to the similarity thereof, cooperating so as to prevent release of the flange 2 from the bronze bushing 1, in directions X, Y, and Z.

The sequence of mounting the axial bearing 2 with the slide bearing 1 is described hereinafter, following the these steps:
(I) The axial bearings 2 are in the free position and with one group of fixation protrusions 3 with initial spacing of 3.0mm (as shown in figure 8);
(II) The deformable protrusions 3 undergo the external force F (see figure 3), sliding into the inclined recesses 4, so as to take on the final position 12;
(III) The inclined recesses 4 with the stops 9 having cooperating geometry receive the plastic protrusions 3, already deformed;
(IV) The axial bearings 2 mounted in the inclined recesses 4 and the plastic protrusions 3 reach the final position 12, undergoing a plastic deformation ΔX ranging from 0.1 to 1.0mm due to the plasticity property.

This, it is clear that the flanged bronze bushing 100 presents a solution that facilitates the process of manufacturing the slide bearing, with manufacture different from the pieces involved, separately and joined at the end of the two processes in a third possible place. Thus, one provides flexibility in the choice of processes, materials and manufacture places, which results in better cost/benefit and greater social return. The present invention enables the maintenance of the axial bearing 2, since the dismounting and mounting thereof do not cause damage to any of the parts, making the product more advantageous for the final user.

## Claims

1. A flanged bronze bushing, comprising:
- one radial slide bearing (1) and two axial slide bearings (2) in the form of a flange,
- wherein the radial slide bearing (1) comprises at least inclined (4) and fixed (4') recesses arranged in the side region (6), and wherein the axial bearing (2) comprises at least one deformable protrusion (3) arranged in a first position (12), a rigid protrusion (8) and a cooperating surface (10) arranged on the deformable protrusion,
- wherein the axial bearing (2) is capable of being integrated with the radial slide bearing (1) through association of the cooperating surface (10) of the deformable protrusion (3) with the inclined recess (4), the deformable protrusion (3) taking on a second position (12), which exhibits plastic deformation (ΔX) with respect to the first position (11); and through simultaneous association of the rigid protrusion (8) with the fixed recess (4'),
**characterized in that**
- the sliding bearing (1) comprises in each side region (6) two inclined recesses (4) and one fixed recess (4'),
- the inclined recesses (4) are provided with two side walls, one of the side walls having angles ranging from 15° to 60° and the other wall having angles ranging from 100° to 170°,
- the fixed recess (4') is provided with two inclined side walls, one of the side walls having an angle between it and the base ranging from 15° to 60° and the other having an angle between it and the base ranging from 100° to 170°.

2. A flanged bronze bushing according to claim 1,
**characterized in that**
one of the side walls from the fixed recess (4) having an angle between it and the base of 45° and the other wall having an angle between it and the base of 135°.

3. A flanged bronze bushing according to claim 1,
**characterized in that**
the deformable protrusions (3) comprise adjacent to them, stress-alleviating rounded surfaces (7).

## Patentansprüche

1. Bundbuchse aus Bronze, die umfasst:
- ein radiales Gleitlager (1) und zwei axiale Gleitlager (2) in der Form eines Flansches,
- wobei das radiale Gleitlager (1) mindestens geneigte (4) und feststehende (4') Ausnehmungen aufweist, die in dem Seitenbereich (6) angeordnet sind, und wobei das axiale Lager (2) mindestens einen verformbaren Vorsprung (3), der in einer ersten Position (12) angeordnet ist, einen starren Vorsprung (8) und eine zusammenwirkende Fläche (10) aufweist, die auf dem verformbaren Vorsprung angeordnet ist,
- wobei das axiale Lager (2) fähig ist, mit dem radialen Gleitlager (1) durch Verbinden der zusammenwirkenden Fläche (10) des verformbaren Vorsprungs (3) mit dem geneigten Vorsprung (4), wobei der verformbare Vorsprung (3) eine zweite Position (12) einnimmt, die eine plastische Verformung (ΔX) gegenüber der ersten Position (11) aufweist, und durch gleichzeitiges Verbinden des starren Vorsprungs (8) mit der feststehenden Ausnehmung (4') integriert zu werden, **dadurch gekennzeichnet, dass**
- das Gleitlager (1) in jedem Seitenbereich (6) zwei geneigte Ausnehmungen (4) und eine feststehende Ausnehmung (4') aufweist,
- die geneigten Ausnehmung en (4) mit zwei Seitenwänden versehen sind, wobei eine der Seitenwände Winkel, die von 15° bis 60° reichen, und die andere Wand einen Winkel, der von 100° bis 170° reicht, aufweist,
- die feste Ausnehmung (4') mit zwei geneigten Seitenwänden versehen ist, wobei eine der Seitenwände einen Winkel zwischen ihr und der Basis, der von 15° bis 60° reicht, aufweist, und die andere einen Winkel zwischen ihr und der Basis, der von 100° bis 170° reicht, aufweist.

2. Bundbuchse aus Bronze nach Anspruch 1,
**dadurch gekennzeichnet, dass**
eine der Seitenwände von der festen Ausnehmung (4) einen Winkel zwischen ihr und der Basis von 45° aufweist, und dass die andere Wand einen Winkel zwischen ihr und der Basis von 135° aufweist.

3. Bundbuchse aus Bronze nach Anspruch 1,
**dadurch gekennzeichnet, dass**
die verformbaren Vorsprünge (3) benachbart zu ihnen abgerundete spannungsdämpfende Flächen (7) aufweisen.

## Revendications

1. Palier de bronze avec flasque, comprenant :
- un palier coulissant radial (1) et deux paliers coulissants axiaux (2) sous la forme d'une flasque,
- dans lequel le palier coulissant radial (1) comprend au moins des évidements incliné (4) et fixe (4') agencés dans la région latérale (6), et dans lequel le palier axial (2) comprend au moins une saillie déformable (3) agencée dans une première position (12), une saillie rigide (8) et une surface coopérante (10) agencée sur la saillie déformable,
- dans lequel le palier axial (2) peut être intégré au palier coulissant radial (1) par l'association de la surface coopérante (10) de la saillie déformable (3) avec l'évidement incliné (4), la saillie déformable (3) prenant une seconde position (12), qui présente une déformation plastique (ΔX) par rapport à la première position (11) ; et par l'association simultanée de la saillie rigide (8) avec l'évidement fixe (4'),
**caractérisé en ce que**
- le palier coulissant (1) comprend dans chaque région latérale (6) deux évidements inclinés (4) et un évidement fixe (4'),
- les évidements inclinés (4) sont dotés de deux parois latérales, l'une des parois latérales ayant des angles dans la plage de 15° à 60° et l'autre paroi ayant des angles dans la plage de 100° à 170°,
- l'évidement fixe (4') est doté de deux parois latérales inclinées, l'une des parois latérales ayant un angle entre celui-ci et la base dans la plage de 15° à 60° et l'autre ayant un angle entre celui-ci et la base dans la plage de 100° à 170°.

2. Palier de bronze avec flasque selon la revendication 1,
**caractérisé en ce que**
l'une des parois latérales depuis l'évidement fixe (4) ayant un angle entre celui-ci et la base de 45° et l'autre paroi ayant un angle entre celui-ci et la base de 135°.

3. Palier de bronze avec flasque selon la revendication 1,
**caractérisé en ce que**
les saillies déformables (3) comprennent adjacentes à celles-ci, des surfaces arrondies d'atténuation de tension (7).
